# EUROPÄISCHE PATENTSCHRIFT

(11) **EP 2 567 262 B1**
(45) Veröffentlichungstag und Bekanntmachung des Hinweises auf die Patenterteilung: **11.07.2018**
(21) Anmeldenummer: 11706832.0
(22) Anmeldetag: 08.03.2011
(51) Int. Cl.: G01V 3/10

(54) **ERFASSUNG EINES METALLISCHEN ODER MAGNETISCHEN OBJEKTS**
DETECTION OF A METAL OR MAGNETIC OBJECT
DÉTECTION D'UN OBJET MÉTALLIQUE OU MAGNÉTIQUE

(30) Priorität: 07.05.2010 DE 102010028723
(43) Veröffentlichungstag der Anmeldung: 13.03.2013
(73) Patentinhaber: Robert Bosch GmbH, 70442 Stuttgart (DE)
(72) Erfinder: ZIBOLD, Tobias, 70567 Stuttgart (DE); ALBRECHT, Andrej, 70567 Stuttgart (DE)
(86) Internationale Anmeldenummer: PCT/EP2011/053451
(87) Internationale Veröffentlichungsnummer: WO 2011/138063

(56) Entgegenhaltungen:
- WO-A1-95/00818
- DE-C1- 4 141 264
- US-A- 5 952 822

## Beschreibung

Bei bestimmten Bearbeitungen von Werkstücken besteht die Gefahr, dass ein im Werkstück verborgener Gegenstand durch die Bearbeitung beschädigt wird. Beispielsweise kann beim Bohren in eine Wand eine Wasser-, Strom- oder Gasleitung beschädigt werden, die innerhalb der Wand verläuft. Im umgekehrten Fall kann es wünschenswert sein, die Bearbeitung gerade so durchzuführen, dass ein im Werkstück verborgener Gegenstand mitbearbeitet wird, beispielsweise wenn das Loch aus dem obigen Beispiel durch ein Armierungseisen oder eine tragende Konstruktion innerhalb der Wand verlaufen soll.

### Stand der Technik

Zur Erfassung eines solchen verborgenen Gegenstandes sind spulenbasierte Metalldetektoren im Stand der Technik bekannt. Derartige Detektoren erzeugen ein magnetisches Feld in einem Messbereich. Befindet sich ein metallischer Gegenstand im Messbereich, so wird der Gegenstand aufgrund seiner Beeinflussung des erzeugten magnetischen Feldes erkannt. Häufig werden zur Bestimmung des erzeugten Magnetfeldes wenigstens zwei Empfangsspulen verwendet, die derartig orientiert und miteinander verbunden sind, dass in Abwesenheit eines metallischen Objekts im Messbereich das von beiden Empfangsspulen gemeinsam gelieferte Messsignal gegen Null geht (differentielle Messung). In einer Variante werden mehrere Sendespulen zur Erzeugung des Magnetfeldes verwendet, die so angesteuert werden, dass unabhängig von einer Anwesenheit eines metallischen Objekts im Messbereich das in den beiden Empfangsspulen gemessene Signal gegen Null geht (feldkompensierte Messung).

DE 10 2007 053 881 A1 beschreibt ein Messverfahren zur Bestimmung der Position bzw. des Winkels einer Spule bezüglich zweier weiterer Spulen. Dazu wird mittels zweier winklig zueinander angeordneter Sendespulen ein magnetisches Wechselfeld generiert. Eine Empfangsspule wird in das magnetische Wechselfeld verbracht und die Ansteuerung der Sendespulen derart verändert, dass in der Empfangsspule von jeder der Sendespulen die gleiche Spannung induziert wird. Ein Verhältnis von den Sendespulen zugeführten Stromwerte dient als Maß für eine Positions- und/oder Winkelbestimmung der Empfangsspule bezüglich der Sendespulen.

DE 10 2004 047 189 A1 beschreibt einen Metalldetektor mit Printspulen.

Die DE 41 41 264 C1 offenbart einen induktiver Annäherungssensor mit einem Oszillator, mit einem durch ein Bedämpfungselement verstimmbaren Schwingkreis, sowie eine, den Schwingungszustand des Oszillators erfassende Auswerteschaltung, welcher Endstufen zum Ansteuern einer Last nachgeschaltet sind. Zur Vermeidung einer Gleichrichterschaltung und einer Empfindlichkeit gegenüber Störeinflüssen ist der Oszillator der DE 41 41 264 C1 in einem Brückenzweig einer Brückenschaltung angeordnet, deren Brückenspannung sich bei einer Be- oder Entdämpfung des Oszillators ändert. In einem weiteren Brückenzweig liegt eine steuerbare Strom- oder Spannungsquelle, die von der Auswerteschaltung derart nachgeführt wird, dass die Brückenspannung ständig in Richtung auf den konstanten Wert der nichtverstimmten Brücke zurückgeführt wird.

Die WO9500818 A1 beschreibt eine weitere Messvorrichtung zum Bestimmen einer Verschiebung eines Objekts aus einem elektrisch leitfähigen Material.

Der Erfindung liegt die Aufgabe zugrunde, einen einfachen und genauen Detektor für ein metallisches Objekt bereitzustellen. Eine weitere Aufgabe der Erfindung besteht in der Angabe eines Verfahrens zur Bestimmung des metallischen Objekts.

### Offenbarung der Erfindung

Die Erfindung löst diese Aufgaben mittels einer Messvorrichtung mit den Merkmalen des Anspruchs 1 und eines Messverfahrens mit den Merkmalen des Anspruchs 8. Unteransprüche geben bevorzugte Ausführungsformen an. Erfindungsgemäß umfasst eine Messvorrichtung zur Erfassung eines metallischen Objekts zwei Sendespulen zur Erzeugung überlagerter Magnetfelder und eine Einrichtung zur Bestimmung einer zwischen den Sendespulen anliegenden Differenzspannung. Ferner ist eine Steuereinrichtung vorgesehen, um die Sendespulen derart mit alternierenden Spannungen zu versorgen, dass ein zu den alternierenden Spannungen taktsynchronder Wechselspannungsanteil der Differenzspannung betragsmäßig minimiert ist. Die Steuereinrichtung ist dazu eingerichtet, das Objekt zu erfassen, wenn das Verhaltnis der alternierenden Spannungen nicht zum Verhältnis von Impedanzen der Sendespulen in Abwesenheit des metallischen Objekts korrespondiert.

Dies ist dann der Fall, wenn die Impedanzen der Sendespulen durch das metallische Objekt aufgrund unterschiedlicher Entfernungen unterschiedlich beeinflusst werden. Durch Verzicht auf eine Empfängerspule oder einen Magnetsensor im Bereich der Sendespulen kann eine Anzahl Spulen bei der Messvorrichtung verringert werden, wodurch der erforderliche Platz für die Messvorrichtung verringert sein kann und Herstellungskosten eingespart werden können. Durch den damit möglichen kompakten Aufbau kann eine Vielzahl Messvorrichtungen auf kleinem Raum angeordnet werden, wodurch eine räumliche Auflösung von Messwerten bis in einen darstellbaren Bereich gesteigert sein kann.

Vorzugsweise sind die alternierenden Spannungen Wechselspannungen, um die Magnetfelder der Sendespulen periodisch in Betrag und Phase zu ändern. Die Wechselspannungen ermöglichen die Synchrondemodulation, womit störende Signale mit Frequenzen ungleich der Modulationsfrequenz sehr effektiv unterdrückt werden können. Darüber hinaus können durch die Wechselspannungen wechselnde Magnetfelder erzeugt werden, um Wirbelstöme in nichtmagnetischen Materialien wie z.B. Kupfer zu induzieren, aufgrund derer diese dann detektiert werden können.

Vorzugsweise ist die Einrichtung zur Bestimmung der Differenzspannung aus zwei in Serie geschalteten ohmschen Widerständen gebildet, die jeweils Teil des komplexen Widerstandes einer der Sendespulen sind. Diskrete Widerstände können so entfallen, wodurch Herstellungskosten verringert sein können.

Die Sendespulen können in zwei beabstandeten, parallelen Ebenen derart angeordnet sein, dass ihre Magnetfelder parallel ausgerichtet sind. Eine Lage des metallischen Objekts bezüglich der Ebenen ist dann daran erkennbar, welche Sendespule mit einer gegenüber dem objektfreien Fall vergrößerten Spannung versorgt wird. Metallische Objekte, die sich jenseits der Ebene einer der Sendespulen befinden, können ignoriert werden, um eine Fehlmessung, die beispielsweise durch einen Benutzer der Messvorrichtung hervorgerufen ist, zu vermeiden.

Eine oder beide der Sendespulen können Luftspulen und insbesondere als gedruckte Schaltung auf einer Platine als Printspulen ausgeformt sein. Dadurch kann die Messeinrichtung so aufgebaut sein, dass sie auf Temperatur- oder Alterungseinflüsse nur sehr schwach reagiert, wodurch eine Kalibrierung einmalig im Rahmen einer Herstellung der Messvorrichtung erfolgen kann. Durch Ausbilden der Sendespulen als Printspulen auf der Platine kann eine präzise Fertigung der Sendespulen bei geringem Produktionsaufwand realisiert sein. Dabei kann die Steuereinrichtung auf derselben Platine aufgebaut sein. Durch Minimierung von Verdrahtungs- und Bestückungskosten können so weitere Herstellungskosten eingespart werden.

Nach einem weiteren Aspekt der Erfindung umfasst ein Messverfahren zur Erfassung eines metallischen Objekts die Schritte des Erzeugens gleichgerichtet orientierter Magnetfelder mittels zweier Sendespulen, des Versorgens der Sendespulen mit alternierenden Spannungen und des Erfassens des Objekts, wenn das Verhältnis der alternierenden Spannungen nicht zum Verhältnis der durch die Sendespulen fließenden Ströme korrespondiert.

Die Erfindung kann auch als Computerprogrammprodukt ausgeführt sein, wobei ein erfindungsgemäßes Computerprogrammprodukt Programmcodemittel zur Durchführung des beschriebenen Verfahrens umfasst und auf einer Verarbeitungseinrichtung ablaufen oder auf einem computerlesbaren Datenträger gespeichert sein kann.

### Kurze Beschreibung der Figuren

Im Folgenden wird die Erfindung mit Bezug auf die beigefügten Figuren genauer beschrieben, in denen:
- Figur 1: ein Blockschaltbild einer Messvorrichtung;
- Figur 2: eine Anordnung von Spulen und eines metallischen Objekts an der Messvorrichtung aus Figur 1;
- Figur 3: eine Anordnung mehrerer Paare Sendespulen für die Messvorrichtung aus Figur 1; und
- Figur 4: ein Ablaufdiagramm eines Verfahrens für die Messeinrichtung aus Figur 1
darstellt.

### Genaue Beschreibung von Ausführungsbeispielen

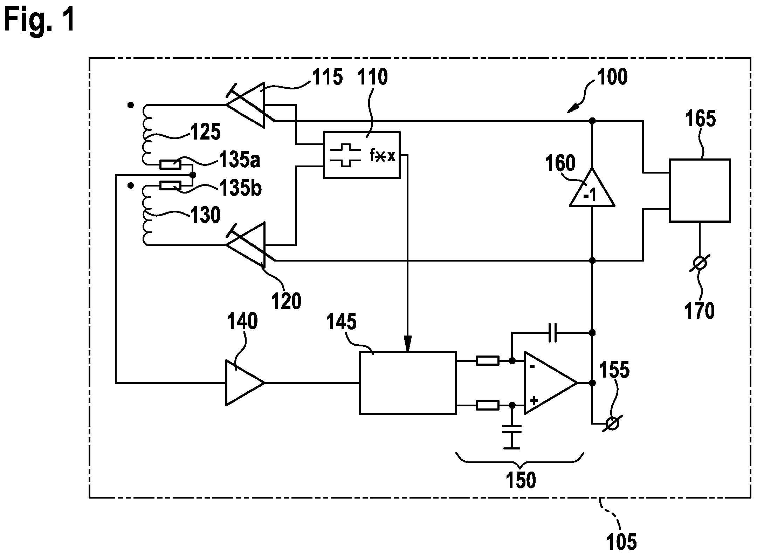

Figur 1 zeigt ein Blockschaltbild einer Messvorrichtung 100. Die Messvorrichtung 100 ist Teil eines Metalldetektors 105 zum Erfassen metallischer Objekte, beispielsweise aus eisenhaltigem Material.

Ein Taktgenerator 110 hat zwei Ausgänge, an denen er phasenverschobene, vorzugsweise um 180° phasenverschobene, periodische Wechselsignale bereitstellt. Die Wechselsignale können insbesondere Rechteck-, Dreieck- oder Sinussignale umfassen. Die Ausgänge des Taktgenerators sind mit einem ersten steuerbaren Verstärker 115 bzw. einem zweiten steuerbaren Verstärker 120 verbunden. Jeder der steuerbaren Verstärker 115, 120 verfügt über einen Steuereingang, über den er ein Signal entgegennimmt, welches einen Verstärkungsfaktor des steuerbaren Verstärkers 115, 120 steuert. Ein Ausgang des ersten steuerbaren Verstärkers 115 ist mit einer ersten Sendespule 125 und ein Ausgang des zweiten steuerbaren Verstärkers 120 mit einer zweiten Sendespule 130 verbunden. Verbleibende Enden der Sendespulen 125 und 130 sind über einen ersten bzw. einen zweiten Widerstand 135a, 135b miteinander verbunden. In einer Ausführungsform werden die Widerstände 135a, 135b durch die ohmschen Widerstände der Sendespulen 125 bzw. 135 gebildet.

Durch jede der beiden Sendespulen 125 und 130 fließt zu einem Zeitpunkt jeweils derselbe Strom. Die Polaritäten und Amplituden der an die beiden Sendespulen 125, 130 angelegten alternierenden Spannungen haben keinen getrennten Einfluss auf die in den Spulen 125, 130 erzeugten Magnetfelder. Wie in Figur 1 durch die Punkte an den Sendespulen 125, 130 angedeutet ist, sind die beiden Sendespulen 125, 130 gleichsinnig orientiert. Somit bauen die Sendespulen Magnetfelder mit gleichgerichteter Ausrichtung auf; gegengerichtete Magnetfelder, wie sie von gegensinnig gewickelten Sendespulen erzeugt werden, sind zwar ebenso möglich, aufgrund des verschwindenden Dipolanteils des überlagerten Magnetfeldes jedoch im Allgemeinen weniger vorteilhaft. Vorstellbar ist jedoch, dass dieser Nachteil bewusst ausgenutzt wird, wenn eine Einschränkung der Detektionstiefe gewünscht ist.

Von den miteinander verbundenen Widerständen 135a, 135b verläuft eine Verbindung zu einem Eingangsverstärker 140. Der Eingangsverstärker 140 ist mit einem konstanten Verstärkungsfaktor dargestellt; in anderen Ausführungsformen kann jedoch ein Verstärkungsfaktor des Eingangsverstärkers 140 auch steuerbar sein. Dadurch kann beispielsweise eine räumliche Auflösung und/oder Empfindlichkeit der Messvorrichtung 100 beeinflussbar und beispielsweise in Abhängigkeit einer Messgröße steuerbar sein.

Der Ausgang des Eingangsverstärkers 140 ist mit einem Synchrondemodulator 145 verbunden. Der Synchrondemodulator 145 ist ferner mit dem Taktgenerator 110 verbunden und empfängt von diesem ein Taktsignal, welches auf die Phasenlage der an den Ausgängen des Taktgenerators 110 bereitgestellten Signale hinweist. In einer einfachen Ausführungsform, bei der die vom Taktgenerator 110 bereitgestellten Signale symmetrische Rechtecksignale sind, kann eines der Ausgangssignale als Taktsignal verwendet werden. Der Synchrondemodulator 145 schaltet im Wesentlichen auf der Basis des vom Taktgenerator 110 bereitgestellten Taktsignals das vom Eingangsverstärker 140 empfangene Messsignal alternierend an seinen oberen bzw. unteren Ausgang durch.

Die beiden Ausgänge des Synchrondemodulators 145 sind mit einem Integrator (integrierenden Komparator) 150 verbunden, der hier als mit zwei Widerständen und zwei Kondensatoren beschalteter Operationsverstärker dargestellt ist. Andere Ausführungsformen sind ebenfalls möglich, beispielsweise als aktiver Tiefpass. Auch eine digitale Ausführung im Anschluss an den Synchrondemodulator ist denkbar, bei der das Signal am Ausgang des Synchrondemodulators zu einem/mehreren Zeitpunkt(en) innerhalb einer Halbwelle analog zu digital gewandelt wird und dann mit dem entsprechenden Wert aus der nächsten Halbwelle verglichen wird. Die Differenz wird integriert und z.B. wieder in ein analoges Signal überführt und zur Steuerung der Verstärker verwendet. Während der Synchrondemodulator 145 das vom Eingangsverstärker 140 empfangene Messsignal am unteren seiner Ausgänge bereitstellt, integriert der Integrator 150 dieses Signal über die Zeit und stellt das Resultat an seinem Ausgang bereit. Während der Synchrondemodulator 145 das vom Eingangsverstärker 140 empfangene Messsignal an seinem oberen Ausgang bereitstellt, wird dieses vom Integrator 150 invertiert über die Zeit integriert und das Resultat am Ausgang des Intergrators 150 bereitgestellt. Die Spannung am Ausgang des Integrators ist das Integral der Differenz der tiefpassgefilterten Ausgänge des Synchrondemodulators.

Über die zwischen den Widerständen 135a, 135b abgreifbare Differenzspannung ist ein Impedanzunterschied zwischen den Sendespulen 125 und 130 erfassbar. Die Impedanz jeder der Sendespulen 125, 130 ist abhängig von einem Abstand eines metallischen Objekts von der Sendespule 125, 130. Sind die Impedanzen der Sendespulen 125, 130 gleich groß, so sind auch die an den Ausgängen des Synchrondemodulators 145 bereitgestellten Signale im Mittel über die Zeit gleich groß und am Ausgang des Integrators 150 wird ein Signal bereitgestellt, das gegen Null (Masse) geht. Unterscheiden sich jedoch die Impedanzen der Sendespulen 125, 130, so sind die an den Ausgängen des Synchrondemodulators 145 bereitgestellten Signale im Mittel nicht mehr gleich, und am Ausgang des Integrators 150 wird ein positives oder negatives Signal bereitgestellt.

Das vom Integrator 150 bereitgestellte Signal wird über einen Anschluss 155 zur weiteren Verarbeitung bereitgestellt. Zusätzlich kann ein Mikrocomputer 165 mit den Steuereingängen der steuerbaren Verstärker 115, 120 verbunden sein. Der Mikrocomputer 165 führt einen Vergleich des bereitgestellten Signals mit einem Schwellenwert durch und gibt an einem Ausgang 170 ein Signal aus, welches auf das metallische Objekt hinweist. Das Signal kann in optischer und/oder akustischer Weise einem Benutzer des Metalldetektors 105 dargeboten werden.

Der Mikrocomputer 165 kann darüber hinaus eine weitere Verarbeitung der von den Steuereingängen der steuerbaren Verstärker 115, 120 abgegriffenen Signale durchführen und in deren Abhängigkeit Parameter der Messvorrichtung 100 steuern. Beispielsweise kann eine Frequenz oder Signalform der alternierenden Spannungen an den Ausgängen des Taktgenerators 110 variiiert werden oder eine Empfindlichkeit des Empfangsverstärkers 140 geändert werden. In einer weiteren Ausführungsform sind weitere der gezeigten Elemente der Messvorrichtung 100 durch den Mikrocomputer 165 implementiert, etwa der Taktgenerator 110, der Synchrondemodulator 145 oder der Integrator 150.

Das gleiche Signal des Integrators 150 wird auch zur Steuerung der Verstärkungsfaktoren der steuerbaren Verstärker 115 und 120 verwendet, wobei der zweite steuerbare Verstärker 120 unmittelbar mit dem Ausgang des Integrators 150 verbunden ist und der erste steuerbare Verstärker 115 mittels eines Inverters 160 mit dem Ausgang des Integrators 150 verbunden ist. Der Inverter 160 bewirkt eine Umkehrung des ihm bereitgestellten Signals derart, dass in Abhängigkeit des Ausgangssignals des Integrators 150 der Verstärkungsfaktor des ersten steuerbaren Verstärkers 115 in dem Maß zunimmt wie der Verstärkungsfaktor des zweiten steuerbaren Verstärkers 120 abnimmt bzw. umgekehrt. Es ist auch denkbar, dass nur der Verstärkungsfaktor eines der beiden steuerbaren Verstärker 115, 120 gesteuert wird, während der Verstärkungsfaktor des zweiten steuerbaren Verstärkers 115, 120 auf einem festen Wert gehalten wird.

Im Vergleich zu einer Messvorrichtung mit nur einer Sendespule ist bei der vorliegenden Messvorrichtung ein Temperatureinfluss auf die Impedanz der Sendespulen 125, 130 durch entsprechende Änderungen in beiden Sendespulen 125, 130 kompensiert. Außerdem kann durch eine geeignete geometrische Anordnung der Sendespulen 125, 130 eine erhöhte Richtwirkung der Messvorrichtung 100 erzielt werden.

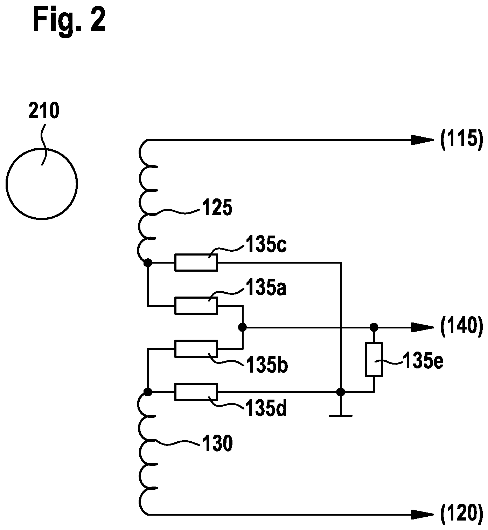

Figur 2 zeigt eine Anordnung 200 der Sendespulen 125, 130 bezüglich eines metallischen Objekts 210 zur Erläuterung des Messprinzips der Messvorrichtung 100 aus Figur 1. Die Sendespulen 125 und 130 sind derart zueinander ausgerichtet, dass die Richtungen ihrer Hauptmagnetfelder miteinander fluchten, wobei die Sendespulen 125, 130 einen gewissen Abstand aufweisen. Im Fall von Sendespulen 125, 130, deren Durchmesser wesentlich größer als ihre Länge ist, beispielsweise wenn die Sendespulen 125, 130 als Printspulen ausgeführt sind, können die Sendespulen 125, 130 in zueinander parallelen Ebenen liegen, im Beispiel der Printspulen etwa auf gegenüberliegenden Oberflächen einer Platine.

Wie oben mit Bezug auf Figur 1 beschrieben ist, sind die Sendespulen 125, 130 derart angeordnet und miteinander verbunden, dass sie in Abhängigkeit der vom Taktgenerator 110 bereitgestellten Signale jeweils alternierende Magnetfelder generieren.

Ein metallisches Objekt 210 befindet sich im Bereich der magnetischen Felder der Sendespulen 125 und 130, wobei ein Abstand des metallischen Objekts 210 zur ersten Sendespule 125 geringer als zur zweiten Sendespule 130 ist. Das magnetische Feld der ersten Sendespule 125 wird also durch das metallische Objekt 210 stärker beeinflusst als das Magnetfeld der zweiten Sendespule 130. Dementsprechend unterscheidet sich die Impedanz der ersten Sendespule 125 von der Impedanz der zweiten Sendespule 130. Bei unterschiedlich großen Impedanzen der Sendespulen 125 und 130 weist die Spannung zwischen den Widerständen 135a und 135b einen von Null verschiedenen Wechselspannungsanteil auf, der zu den alternierenden Spannungen der steuerbaren Verstärker 115, 120 taktsynchron ist. Dieser taktsynchrone Wechselspannungsanteil wird durch den Synchrondemodulator 145 und den nachfolgenden Integrator 150 bestimmt. Der Betrag des taktsynchronen Wechselspannungsanteils der Differenzspannung hängt von der Asymmetrie der Impedanzen der Sendespulen 125, 130 ab. Am Ausgang des Integrators 150 stellt sich daher ein Signal ein, das von der Asymmetrie der magnetischen Felder abhängt. Die Phase des taktsynchronen Wechselspannungsanteils der Differenzspannung unterscheidet sich um 180° je nach nachdem, ob sich das metallische Objekt 210 wie dargestellt näher an der ersten Sendespule 125 als an der zweiten Sendespule 130 befindet, oder ob sich das metallische Objekt 210 näher an der zweiten Sendespule 130 als an der ersten Sendespule 125 befindet.

In Abhängigkeit der Ausgangsspannung des Integrators 150 werden die Verstärkungsfaktoren der steuerbaren Verstärker 115, 120 gegenläufig verändert, so dass die Sendespulen 125, 130 mit unterschiedlich großen Spannungen versorgt werden. Möglich ist auch, dass nur der Verstärkungsfaktor eines der steuerbaren Verstärker 125, 130 verändert wird, während der Verstärkungsfaktor des zweiten steuerbarer Verstärkers 125, 130 auf einem festen Wert gehalten wird. Für die Anordnung gemäß Figur 1 fließt durch jede der beiden Sendespulen 125, 130 zu einem Zeitpunkt derselbe Strom. Aufgrund der bei Anwesenheit eines Objektes 220 unterschiedlichen Impedanzen der Sendespulen 125, 130 ist jedoch der Spannungsabfall an den Sendespulen 125 und 130 unterschiedlich groß und es ergibt sich ein von Null verschiedener taktsynchroner Wechselspannungsanteil der Differenzspannung.

Die Anwesenheit des metallischen Objekts 210 in den magnetischen Feldern ist durch die Abweichung des am Anschluss 155 anliegenden Regelsignals von Null erfassbar. In einer Ausführungsform werden metallische Objekte nur auf der Basis eines vorbestimmten Vorzeichens des Regelsignals erfasst. So werden Objekte auf einer Seite der Sendespulen 125, 130 ignoriert, die beispielsweise durch einen Benutzer der Messvorrichtung hervorgerufen sein können.

In einer weiteren in Figur 2 dargestellten Ausführungsform sind ein dritter Widerstand 135c und ein vierter Widerstand 135d vorgesehen, die jeweils einen Anschluss der Sendespulen 125, 130, der mit einem der Widerstände 135a bzw. 135b verbunden ist, an Masse führen. Ein fünfter Widerstand 135e führt vom Eingang des Eingangsverstärkers 140 an Masse. Im Gegensatz zu der in Figur 1 dargestellten Ausführungsform ermöglicht die in Figur 2 dargestellte Ausführungsform, dass zu einem Zeitpunkt durch jede der beiden Sendespulen unterschiedliche Ströme fließen. Die auf Masse bezogenen Polaritäten und Amplituden der an die beiden Sendespulen 125, 130 angelegten alternierenden Spannungen haben daher einen getrennten Einfluss auf jedes der beiden in den Spulen 125, 130 erzeugten Magnetfelder. Damit lassen sich folgende Variationen der Messvorrichtung 100 durchführen:
- die steuerbaren Verstärker 115 und 120 liefern, bezogen auf Masse, entgegengesetzte Spannungen. Im objektfreien Fall haben die Spannungen gleiche Amplituden. In Anwesenheit eines metallischen Objektes 210 unterscheiden sich die Amplituden der anliegenden Spannungen. Bevorzugterweise wird mit gleich gerichteten Magnetfeldern gearbeitet, gegengerichtete Magnetfelder sind jedoch auch denkbar.
- die steuerbaren Verstärker 115 und 120 liefern, bezogen auf Masse, gleich gerichtete Spannungen und die Wicklungen der Sendespulen 125, 130 sind gleichsinnig, so dass gleich gerichtete Magnetfelder entstehen. Hier haben die Spannungen, die während einer Halbwelle an den beiden Sendespulen 125, 130 anliegen, bereits im objektfreien Fall unterschiedliche Amplituden. Jedoch liegen im objektfreien Fall in der darauffolgenden Halbwelle diese Amplituden an der jeweils anderer Sendespule 125, 130 an. In Anwesenheit eines metallischen Objektes 210 unterscheiden sich dagegen die Amplituden an der jeweils anderen Sendespule 125, 130 auch in aufeinanderfolgenden Halbwellen.
- die steuerbaren Verstärker 115 und 120 liefern, bezogen auf Masse, gleich gerichtete Spannungen und die Wicklungen der Sendespulen 125, 130 sind gegensinnig, so dass gegengerichtete Magnetfelder entstehen. Für die Amplituden der Spannungen gelten die Ausführungen bezüglich der vorangehenden Variation.

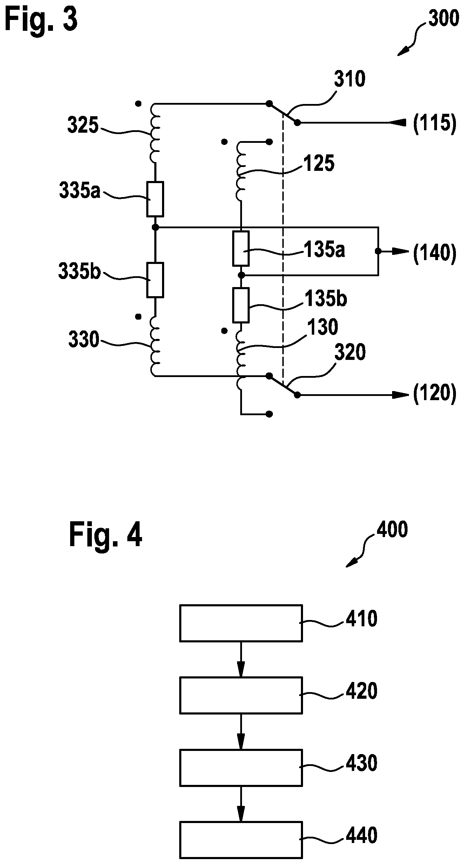

Figur 3 zeigt eine Anordnung 300 mit mehren Paaren von Sendespulen für die Messvorrichtung 100 aus Figur 1. Zusätzlich zu der mit Bezug auf Figur 1 beschriebenen Anordnung der Sendespulen 125, 130 mit den Widerständen 135a, 135b sind entsprechend verschaltete weitere Sendespulen 325, 330 mit weiteren Widerständen 335a, 335b vorgesehen. Zwei miteinander gekoppelte Schalter 310 und 320 verbinden selektiv jeweils Anschlüsse der Sendespulen 125, 130 oder der Sendespulen 325, 330 mit den Ausgängen der steuerbaren Verstärker 115, 120 aus Figur 1. Die Verbindungen zwischen zueinander korrespondierenden Widerständen 135a, 135b, 335a und 335b sind miteinander verbunden und führen zum Eingangsverstärker 140.

Die Spulenpaare 125, 130 und 325, 330 können in einer Ebene angeordnet sein oder sich in unterschiedlichen Ebenen befinden. Insbesondere nebeneinander liegende Spulen können als Printspulen ausgeführt sein. Ändert sich die Differenzspannung am Eingangsverstärker 140, wenn die Schalter 115 und 120 umgeschaltet werden, so kann auf der Basis der geometrischen Anordnung der Spulenpaare 125, 130 und 325, 330 auf eine Richtung geschlossen werden, in der das metallische Objekt 210 liegt, beispielsweise durch Triangulation. Ebenso ist es möglich auf eine Entfernung des Objektes zu schließen. Die Richtungsbestimmung kann durch weitere Spulenpaare verfeinert werden. Wird eine große Anzahl ausreichend dicht aneinander angeordneter Sendespulen verwendet, so kann eine Auflösung der Messvorrichtung 100 bis in einen bildhaften Bereich hinein gesteigert werden.

Figur 4 zeigt eine schematisches Ablaufdiagramm eines Verfahrens 400 zur Erfassung eines metallischen Objekts 210 entsprechend der Messvorrichtung 100 aus Figuren 1 und 2. In einem Schritt 410 werden mittels der Sendespulen 125, 130 gleichgerichtet orientierte magnetische Wechselfelder erzeugt. In einem anschließenden Schritt 420 werden die Sendespulen 125, 130 durch Steuern der Verstärkungsfaktoren der Verstärker 115, 120 mit phasenverschobenen alternierenden Spannungen des Taktgenerators 110 versorgt, und zwar so, dass der zu den alternierenden Spannungen taktsynchrone Wechselspannungsanteil der Differenzspannung betragsmäßig minimiert ist. In einem abschließenden Schritt 430 wird das metallische Objekt 210 erfasst, wenn das Verhältnis der alternierenden Spannungen nicht zum Verhältnis der durch die Sendespulen 125, 130 fließenden Ströme korrespondiert.

In der in Figur 1 dargestellten Messvorrichtung sind die Ströme durch beide Sendespulen 125, 130 immer gleich, das Verhältnis der Ströme folglich 1. Die Differenzspannung am Eingang des Eingangsverstärkers 140, genauer gesagt der taktsynchrone Wechselspannungsanteil der Differenzspannung, wird auf Null geregelt, indem mittels der steuerbaren Verstärker 115, 120 unterschiedliche Spannungen an die beiden Sendespulen 125, 130 angelegt werden. In diesem Fall unterscheidet sich das Verhältnis der Spannungen an den Sendespulen 125, 130 von 1 und damit vom Verhältnis der Ströme durch die Sendespulen 125, 130. Das Verhältnis der Spannungen korrespondiert zu dem Steuersignal am Ausgang des Integrators 150. Das Steuersignal am Anschluss 155 ist also genau dann ungleich Null, wenn das Verhältnis der Spannungen an den Sendsepulen 125, 130 ungleich 1 ist, was durch unterschiedliche Impedanzen der Sendespulen 125 und 130 bewirkt wird. Sind die Impedanzen der Sendespulen 125, 130 im objektfreien Fall gleich, so weist das am Anschluss 155 anliegende Signal auf das Objekt 210 hin, wenn das Signal ungleich Null ist..

## Patentansprüche

1. Messvorrichtung (100) zur Erfassung eines metallischen Objekts (210), wobei die Messvorrichtung (100) folgendes umfasst:
- zwei Sendespulen (125, 130) zur Erzeugung überlagerter Magnetfelder;
- eine Einrichtung (135a, 135b) zur Bestimmung einer zwischen den Sendespulen (125, 130) anliegenden Differenzspannung, **dadurch gekennzeichnet, dass** die Messvorrichtung weiterhin folgendes umfasst:
- eine Steuereinrichtung (110-120, 145-160) zur Versorgung der Sendespulen (125, 130) mit alternierenden Spannungen derart, dass ein zu den alternierenden Spannungen taktsynchroner Wechselspannungsanteil der Differenzspannung betragsmäßig minimiert ist; wobei
- die Steuereinrichtung (110-120, 145-160) dazu eingerichtet ist, das metallische Objekt (210) zu erfassen, wenn das Verhältnis der alternierenden Spannungen nicht zu einem Verhältnis von Impedanzen der Sendespulen (125, 130) in Abwesenheit des metallischen Objekts (220) in den Magnetfeldern korrespondiert.

2. Messvorrichtung (100) nach Anspruch 1, **dadurch gekennzeichnet, dass** die alternierenden Spannungen zueinander phasenverschobene Wechselspannungen sind, um die Magnetfelder der Sendespulen (125, 130) periodisch in Betrag und Phase zu ändern.

3. Messvorrichtung (100) nach Anspruch 1 oder 2, **dadurch gekennzeichnet, dass** die Einrichtung (135a, 135b) zur Bestimmung der Differenzspannung aus zwei in Serie geschalteten ohmschen Widerständen (135a, 135b) gebildet ist, die jeweils Teil des komplexen Widerstandes der Sendespulen (125, 130) sind.

4. Messvorrichtung (100) nach einem der vorangehenden Ansprüche, **dadurch gekennzeichnet, dass** jeweils einer der Anschlüsse jeder Sendespule (125, 130) mittels eines weiteren Widerstandes (135c, 135d) mit Masse verbunden ist.

5. Messvorrichtung (100) nach einem der vorangehenden Ansprüche, **dadurch gekennzeichnet, dass** die Sendespulen (125, 130) in zwei beabstandeten, parallelen Ebenen derart angeordnet sind, dass ihre Magnetfelder parallel ausgerichtet sind.

6. Messvorrichtung (100) nach einem der vorangehenden Ansprüche, **dadurch gekennzeichnet, dass** wenigstens eine der Sendespulen (125, 130) eine Luftspule ist.

7. Messvorrichtung (100) nach Anspruch 6, wobei die Luftspule eine gedruckte Schaltung auf einer Platine ist.

8. Messverfahren (400) zur Erfassung eines metallischen Objekts (210), folgende Schritte umfassend:
- Erzeugen (410) überlagerter Magnetfelder mittels zweier Sendespulen (125, 130);
- Bestimmen einer zwischen den Sendespulen (125, 130) anliegenden Differenzspannung, und **gekennzeichnet durch**
- Versorgen (420) der Sendespulen (125, 130) mit alternierenden Spannungen derart, dass ein zu den alternierenden Spannungen taktsynchroner Wechselspannunganteil der Differenzspannung betragsmäßig minimiert ist; und
- Erfassen (430) des Objekts (210), wenn das Verhältnis der alternierenden Spannungen nicht zu einem Verhältnis von Impedanzen der Sendespulen (125, 130) in Abwesenheit des metallischen Objekts (220) in den Magnetfeldern korrespondiert.

9. Computerprogrammprodukt mit Programmcodemitteln zur Durchführung des Messverfahrens von Anspruch 8, wenn es auf einer Verarbeitungseinrichtung abläuft oder auf einem computerlesbaren Datenträger gespeichert ist.

## Claims

1. Measuring apparatus (100) for sensing a metallic object (210), wherein the measuring apparatus (100) comprises the following:
- two transmission coils (125, 130) for producing overlaid magnetic fields;
- a device (135a, 135b) for determining a differential voltage applied between the transmission coils (125, 130), **characterized in that** the measuring apparatus furthermore comprises the following:
- a control device (110-120, 145-160) for supplying the transmission coils (125, 130) with alternating voltages such that an AC voltage component of the differential voltage, which AC voltage component is in sync with the alternating voltages, is minimized in terms of absolute value;
wherein
- the control device (110-120, 145-160) is set up to sense the metallic object (210) when the ratio of the alternating voltages does not correspond to a ratio of impedances of the transmission coils (125, 130) in the absence of the metallic object (220) in the magnetic fields.

2. Measuring apparatus (100) according to Claim 1, **characterized in that** the alternating voltages are AC voltages having a phase shift relative to one another, in order to change the magnetic fields of the transmission coils (125, 130) periodically in terms of absolute value and phase.

3. Measuring apparatus (100) according to Claim 1 or 2, **characterized in that** the device (135a, 135b) for determining the differential voltage is formed from two series-connected nonreactive resistors (135a, 135b) which are each part of the complex resistance of the transmission coils (125, 130).

4. Measuring apparatus (100) according to one of the preceding claims, **characterized in that** a respective one of the connections of each transmission coil (125, 130) is connected to ground by means of a further resistor (135c, 135d).

5. Measuring apparatus (100) according to one of the preceding claims, **characterized in that** the transmission coils (125, 130) are arranged in two spaced, parallel planes, such that the magnetic fields therefrom are oriented parallel.

6. Measuring apparatus (100) according to one of the preceding claims, **characterized in that** at least one of the transmission coils (125, 130) is an air-core coil.

7. Measuring apparatus (100) according to Claim 6, wherein the air-core coil is a printed circuit on a circuit board.

8. Measuring method (400) for sensing a metallic object (210), comprising the following steps:
- overlaid magnetic fields are produced (410) by means of two transmission coils (125, 130);
- a differential voltage applied between the transmission coils (125, 130) is determined, and **characterized by**
- the transmission coils (125, 130) being supplied (420) with alternating voltages such that an AC voltage component of the differential voltage, which AC voltage component is in sync with the alternating voltages, is minimized in terms of absolute value; and
- the object (210) being sensed (430) when the ratio of the alternating voltages does not correspond to a ratio of impedances of the transmission coils (125, 130) in the absence of the metallic object (220) in the magnetic fields.

9. Computer program product having program code means for carrying out the measuring method of Claim 8 when said computer program product is executed on a processing device or is stored on a computer-readable data storage medium.

## Revendications

1. Système de mesure (100) destiné à détecter un objet métallique (210), le système de mesure (100) comprenant les éléments suivants :
- deux bobines d'émission (125, 130) destinées à générer des champs magnétiques superposés,
- un dispositif (135a, 135b) destiné à déterminer une tension différentielle appliquée entre les bobines d'émission (125, 130), **caractérisé en ce que** le système de mesure comprend en outre les éléments suivants :
- un dispositif de commande (110-120, 145-160) destiné à alimenter les bobines d'émission (125, 130) avec des tensions alternées de manière à réduire au minimum la valeur d'une composante de tension alternative de la tension différentielle qui est synchronisée avec les tensions alternées,
- le dispositif de commande (110-120, 145-160) étant conçu pour détecter l'objet métallique (210) lorsque le rapport des tensions alternées ne correspond pas à un rapport des impédances des bobines d'émission (125, 130) en l'absence de l'objet métallique (220) dans les champs magnétiques.

2. Système de mesure (100) selon la revendication 1, **caractérisé en ce que** les tensions alternées sont des tensions alternatives mutuellement déphasées afin de modifier périodiquement la valeur et la phase des champs magnétiques des bobines d'émission (125, 130).

3. Système de mesure (100) selon la revendication 1 ou 2, **caractérisé en ce que** le dispositif (135a, 135b) destiné à déterminer la tension différentielle est formé par deux résistances (135a, 135b) ohmiques branchées en série qui sont respectivement une partie de la résistance complexe des bobines d'émission (125, 130).

4. Système de mesure (100) selon l'une des revendications précédentes, **caractérisé en ce que** l'une des bornes de chaque bobine d'émission (125, 130) est respectivement reliée à la masse au moyen d'une résistance (135c, 135d) supplémentaire.

5. Système de mesure (100) selon l'une des revendications précédentes, **caractérisé en ce que** les bobines d'émission (125, 130) sont disposées dans deux plans parallèles séparés de telle sorte que leurs champs magnétiques sont orientés en parallèle.

6. Système de mesure (100) selon l'une des revendications précédentes, **caractérisé en ce qu'**au moins l'une des bobines d'émission (125, 130) est une bobine à air.

7. Système de mesure (100) selon la revendication 6, dans lequel la bobine à air est un circuit imprimé sur une platine.

8. Procédé de mesure (400) destiné à détecter un objet métallique (210), comprenant les étapes suivantes :
- génération (410) de champs magnétiques superposés au moyen de deux bobines d'émission (125, 130) ;
- détermination d'une tension différentielle appliquée entre les bobines d'émission (125, 130), et **caractérisé par**
- alimentation (420) des bobines d'émission (125, 130) avec des tensions alternées de manière à réduire au minimum la valeur d'une composante de tension alternative de la tension différentielle qui est synchronisée avec les tensions alternées ; et
- détection (430) de l'objet (210) lorsque le rapport des tensions alternées ne correspond pas à un rapport d'impédances des bobines d'émission (125, 130) en l'absence de l'objet métallique (220) dans les champs magnétiques.

9. Produit de programme informatique comprenant des moyens de code de programme pour mettre en oeuvre le procédé de mesure selon la revendication 8 lorsqu'il est exécuté sur un dispositif de traitement ou enregistré sur un support de données lisible par ordinateur.
